Europäisches Patentamt

European Patent Office

Office européen des brevets

(11) Publication number: **0 260 040**
**A1**

## (12) EUROPEAN PATENT APPLICATION

(21) Application number: **87307621.0**

(22) Date of filing: **27.08.87**

(51) Int. Cl.⁴: **H02K 11/00** , H02K 5/14 ,
H02K 23/66

(30) Priority: **01.09.86 GB 8621092**

(43) Date of publication of application:
**16.03.88 Bulletin 88/11**

(84) Designated Contracting States:
**DE FR GB IT**

(71) Applicant: **Johnson Electric Industrial**
**Manufactory Limited**
**Johnson Building 14-16 Lee Chung Street**
**Chaiwan(HK)**

(72) Inventor: **Baines, Roger Frederick**
**Flat D1, Riviera Apartments 4 South Bay**
**Road**
**Repulse Bay Hong Kong(HK)**

(74) Representative: **Luckhurst, Anthony Henry**
**William et al**
**MARKS & CLERK 57-60 Lincoln's Inn Fields**
**London WC2A 3LS(GB)**

(54) **Suppression in electric motors.**

㊼ To facilitate the addition of a suppression ele-
ment to an electric motor, a collar (26) supports a
brush assembly (19) at one of two positions (28, 31).
At a first position (28), a terminal (23) is in intimate
contact with the assembly (19), at the second posi-
tion (31) a terminal (24) is supported at the first
position (28) and electrically connected to the brush
assembly (19) by the suppression element.

FIG. 1

EP 0 260 040 A1

## SUPPRESSION IN ELECTRIC MOTORS

The present invention relates to suppression in electric motors, particularly in fractional horsepower permanent magnet direct current (PMDC) electric motors. Suppression can be achieved by placing a suppression element between the power supply to the motor and motor brush gear. Typically a suppression element, which may comprise relatively complex circuitry, is housed in a unit installed on the outside of the motor, thus increasing the effective size of the motor.

The present invention aims to provide an electric motor in which a suppression element can be installed inside the motor prior to assembly, without requiring an increase in the motor size.

According to the invention there is provided an electric motor having a housing, a brush, means for supporting the brush and urging it against a commutator on a shaft of the motor, a terminal electrically connected to the brush support means and extending out of the motor casing for connection to a power supply, the brush support means being supported in the motor housing by a collar extending around the inner circumference of the housing, the collar having a pair of positions for supporting the brush support means and terminal, whereby the brush support means and terminal are supported in electrical connection at one of said pair of positions or the brush support means is supported at a first of said pair of positions and th e or a terminal is supported at the second of said pair of positions, a suppression element being electrically connected between the terminal and the brush support means when supported at separate positions to supply current from the terminal to the brush.

Preferably two each of first and second support positions are provided, the first and second positions alternating and being spaced from each other by 90 degrees relative to the motor shaft.

Preferably the collar extends around the full circumference of the motor. Preferably the collar is formed of a strip coated with a non-conducting metal oxide, in particular it is formed from anodised aluminium. The strip may be stamped and formations provided for supporting the terminal and brush support means.

Preferably an end cap is provided and the terminals project through the end cap. Preferably the terminals are shrouded by the collar where they project through the end cap.

Other preferred features and advantages of the invention will be apparent from the following description and the accompanying claims.

The invention will be further described by way of example with reference to the accompanying drawings, in which:-

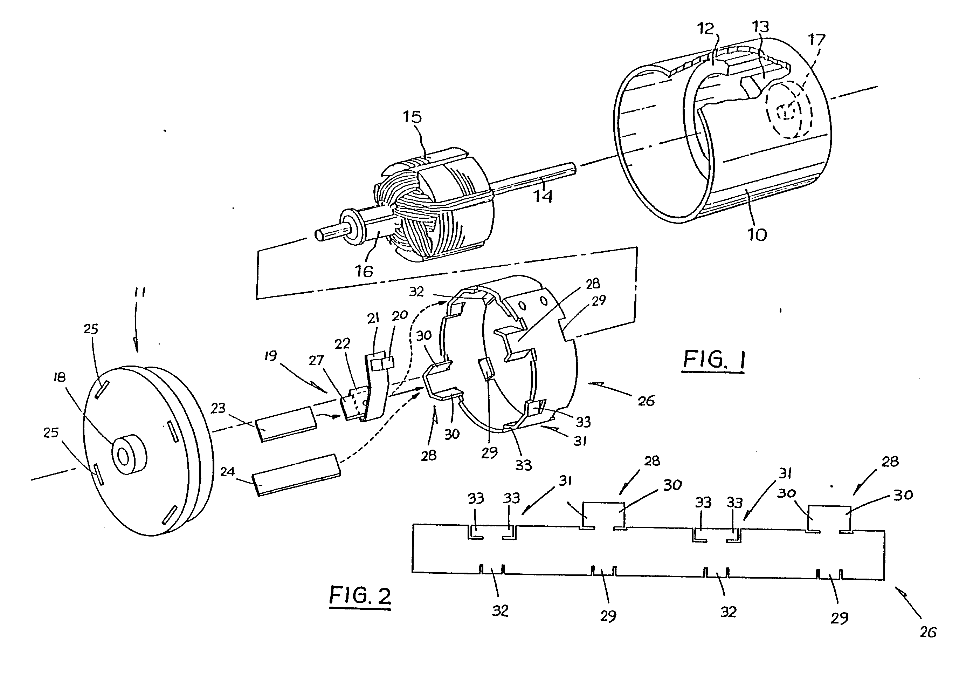

Figure 1 is an exploded view of a fractional horsepower pmdc motor embodying the invention; and

Figure 2 is a plan of a blank for forming a collar for the motor of Figure 1.

Referring to the drawings, a fractional horsepower DC electric motor has a housing comprising a deepdrawn can-like steel outer casing 10 and an end cap 11. Permanent magnets 12, 13 are held in the housing in a manner generally known in the art. A shaft 14 carries a wound armature 15 and a commutator 16 which is electrically connected to the armature coils as is known. The shaft 14 is journalled in bearings 17, 18 in an end wall of the casing 10 and the end cap 11.

Brush gear 19 comprises a carbon brush 20 supported on a resilient copper alloy brush leaf 21 which is riveted to a brass back plate 22. In place of a discrete carbon brush 20, the leaf itself may bear against the commutator 16, but in this event the leaf will normally be coated, for example, with precious metal, in the region which contacts the commutator. Two types of brass terminals 23, 24 are provided. A terminal is arranged to project through an aperture 25 in the end cap 11 and to be electrically connected to brass plate 22. The terminal and brush assembly is supported in a collar 26 which is formed from a blank of aluminium which is anodised to form an insulating layer on the surfaces of the collar 26. The ends of the blank may be overlapped and riveted to form a circle. Although reference is made to only one brush assembly and terminal, a pair of such items is provided in the motor.

To assemble the motor the rotor assembly 14, 15, 16 is inserted in the casing 10, shaft 14 being held in bearing 17. The brush gear and terminal are then assembled.

If a suppression element is not required, short terminal 23 is riveted to projection 27 of brass plate 22. The joined terminal and brush assembly are then fitted to the collar 26 at a first position 28 which is arranged to support a terminal 24 or a terminal and brush assembly 21, 22, 23. Brass plate 22 sits on a shelf 29 pressed from the collar blank and then ears 30 are folded around the projection 27 and associated terminal 23.

Similarly, a brush assembly and terminal is attached at the other first position 28, diametrically opposite. Shelf 29 may be folded up to bear against the brass plate 22 and help hold it in position.

If it is desired to fit a suppression element then a long large terminal 24 is fixed in the first position 28 by ears 30 and shalf 29, and the brush assembly 19 is then fixed in second position 31. Brass plate 22 sits on shelf 32 and ears 33 are folded around projection 27. A suppression element (not shown) is then electrically connected between the terminal 24 and brass plate 22, the suppression element sitting snug against the inside of collar 26 to avoid interfering with the brush gear. The suppression element may be soldered between the terminals 23, 24 or attached in some other convenient manner, and typically comprises a capacitor, a resistor or a varistor.

Collar 26 is then pushed into the end of casing 10, where it may rest against the magnets 12, 13 or be spaced therefrom. Ribs and cooperating recesses (not shown) may be provided in the collar 26 and casing 10 to locate the collar.

The brushes must be installed in a particular position relative to the magnets 12, 13. Accordingly, if a suppression element is fitted the collar 26 must be rotated through 90 degrees to bring the brushes back to the position adopted if the suppression elements were not used. It will therefore be necessary to provide this when providing ribs and recesses in collar 26 and casing 10 for locating the collar 26. Also it is necessary to rotate the cap 11 through 90 degrees to line up the respective holes 25 with the terminal 23 or 24, but preferably four holes 25 are provided so that reorienting the cap is not necessary. The cap is a push fit on the outside of the casing end and may be locked in position by protrusions engaging in cutouts stamped in the casing wall (not shown), as is generally known in the art.

The positions 28 and the positions 31 are shown spaced at 180 degrees, to facilitate the brushes 20 contacting diametrically opposite parts of the commutator, it will be appreciated that they may be spaced at 90 degrees or some other angle to suit the motor design. Also there need not be 90 degrees between adjacent first and second positions, although this is preferable to allow maximum room for the suppression element.

Ears 33 are positioned to encircle the terminal 23 (24) where it passes through the aperture 25 in the cap 11, thus insulating it from the end cap 11, which is preferably of metal.

By supporting the brush gear in a metal collar in contact with the casing heat generated in the brush gear may be efficiently conducted to the casing to enhance cooling.

It will be appreciated that the invention is not limited to brush assemblies using a leaf type support 21. It may also be used with caged brush assemblies, ring 26 being adapted to support the cage.

Also two brush assemblies may be used. In a first the terminal portion 23 is integrally formed with the assembly, for example with back plate 22, to obviate use of a discrete terminal 23, and in a second the back plate is shortened as at 22 to fit within the bounds of collar 26.

Also, the back plate 22 may be an integral part of the leaf 21.

Various modifications may be made to the described embodiment and it is desired to include all such modifications as fall within the scope of the accompanying claims.

**Claims**

1. An electric motor having a housing (10), a brush (20), means (21) for supporting the brush and urging it against a commutator (16) on a shaft (14) of the motor, a terminal (23, 24) electrically connected to the brush support means (21) and extending out of the motor housing (10, 11) for connection to a power supply, the brush support means (21, 22) being supported in the motor housing (10, 11) by a collar (26) extending around the inner circumference of the housing (10, 11), the collar (26) having a pair of positions (28, 31) for supporting the brush support means (21, 22) and terminal (23, 24), whereby the brush support means (21, 22) and terminal (23, 24) are supported in electrical connection at one (28) of said pair of positions or the brush support means (21, 22) is supported at a first (31) of said pair of positions and the or a terminal (24) is supported at the second (28) of said pair of positions, a suppression element being electrically connected between the terminal (24) and the brush support means (21, 22) when supported at separate positions (28, 31) to supply current from the terminal (24) to the brush (20).

2. An electric motor as claimed in claim 1, wherein two pairs of support positions (28, 31) are provided, the positions being spaced apart by 90 degrees relative to the motor shaft (14).

3. An electric motor as claimed in claim 1 or 2, wherein the collar (26) extends for 360 degrees around the motor shaft (14).

4. An electric motor as claimed in claim 1, 2 or 3, wherein the collar (26) is formed from a strip of metal, the surface of the collar (26) being oxidised to form an insulating surface.

5. An electric motor as claimed in claim 4, wherein the collar (26) is of anodised aluminium.

6. An electric motor as claimed in any one of claims 1 to 5, wherein a support position (28, 31) comprises an inwardly projecting shelf (29, 32) and an axially extending tab having ears (30, 33) for encircling a terminal (23, 24) and/or brush support means (21, 22).

7. An electric motor as claimed in claim 6, wherein the terminal (23, 24) extends through an aperture (25) in a metal end cap (11) of the motor, and the tab and ears (30) at the support position (28) supporting the terminal (23, 24) insulate the terminal (23, 24) from the end cap (11) where it passes through the aperture (25).

8. An electric motor as claimed in any one of claims 1 to 9, wherein a first (28) of a said pair of positions is adapted to support a terminal (24) or a terminal (23) and brush support (21, 22), and the second (31) of a said pair of positions is adapted to support a said brush support (21, 22).

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 708 723  (STAAK)<br>* Column 1, lines 34-37; column 1, line 62 - column 2, line 53; figures 1-3 *<br>--- | 1,3 | H 02 K   11/00<br>H 02 K    5/14<br>H 02 K   23/66 |
| A | PATENT ABSTRACTS OF JAPAN, vol. 4, no. 112 (E-21) [594], 12th August 1980; & JP-A-55 68 847 (MATSUSHITA KENKO K.K.) 23-05-1980<br>* Abstract; figure *<br>--- | 1,8 | |
| A | DE-C- 740 379  (SEHRINGER)<br>* Page 2, lines 49-65; figure *<br>--- | 2 | |
| A | GB-A- 972 452  (C.A.V.)<br>* Page 1, lines 44-71; figures 1,2 *<br>--- | 4,5 | |
| A | GB-A-2 013 042  (MABUCHI MOTOR)<br>* Page 2, lines 28-89; figures 1,2 *<br>--- | 6,7 | |
| P,A | FR-A-2 580 439  (LICENTIA)<br>* Page 7, line 29 - page 9, line 34; figures 9,10 *<br>--- | 1,2,8 | TECHNICAL FIELDS SEARCHED (Int. Cl.4) |
| P,A | GB-A-2 184 610  (JOHNSON)<br>* Page 2, lines 36-52; figures 1-3 *<br>----- | 4,5 | H 02 K |

The present search report has been drawn up for all claims

| Place of search | Date of completion of the search | Examiner |
|---|---|---|
| THE HAGUE | 08-12-1987 | TIO K.H. |